# EUROPEAN PATENT APPLICATION

(11) **EP 1 045 381 A2**
(43) Date of publication of application: **18.10.2000**
(21) Application number: 00107877.3
(22) Date of filing: 12.04.2000
(51) Int. Cl.: G11B 11/105

(54) **Magneto-optical disk**

(30) Priority: 16.04.1999 JP 11011899
(71) Applicant: SONY CORPORATION, Tokyo 141 (JP)
(72) Inventor: Nakayama, Hiroshi, Shinagawa-ku, Tokyo (JP); Ootomo, Katsuhiko, Shinagawa-ku, Tokyo (JP); Tanaka, Tomiji, Shinagawa-ku, Tokyo (JP); Endo, Somei, Shinagawa-ku, Tokyo (JP)
(74) Representative: Körber, Wolfhart, Dr.

(57) **Abstract**

A first dielectric film 3, a first magnetic film 4, a second magnetic film 5, a second dielectric film 6, and a reflecting film 7 are formed on a substrate 2, one upon another in the order they are mentioned. The first magnetic film 4 is made of GdFeCo and has a predetermined Curie point. The second magnetic film 5 is made of TbFeCo and has a Curie point lower than that of the first magnetic film 4. The first magnetic film 4 has an oxide film.

## Description

### BACKGROUND OF THE INVENTION

The present invention relates to a magneto-optical disk on and from which magnetic signals are recorded and reproduced by a magneto-optical recording system. More particularly, the invention relates to a magneto-optical disk that has two magnetic layers, which differ in composition.

Magneto-optical disks are optical recording media, each having a magnetic layer that serves as a signal-recording surface. A recording/reproducing apparatus applies a laser beam to a magneto-optical disk, thereby writing magnetic domains in the magnetic layer. Magnetic signals are thereby recorded on the magneto-optical disk. To reproduce the magnetic signals from the magneto-optical disk, the recording/reproducing apparatus applies to the disk a laser beam that is less intense than the one applied to record the signals. This laser beam achieves a magneto-optic effect, which reproduces the magnetic signals from the magneto-optical disk. The process of recording and reproducing the magnetic signals in this way is generally known as "magneto-optical recording system".

Magneto-optical recording systems are classified into two types. The first type is light modulation recording system. The second type is magnetic-field modulation recording system. In the light modulation recording system, a signal is recorded on a magneto-optical disk by modulating the laser beam applied to the disk in accordance with the signal to be recorded, while a magnetic field of a constant intensity is being applied to the disk from an external device. In the magnetic-field modulation recording system, a signal is recorded on a magneto-optical disk by inverting the magnetic field applied to the disk is modulated in accordance with the signal, while a laser beam is being intermittently applied to the disk at regular intervals or while a laser beam of constant intensity is being applied to the disk.

Overwriting can be accomplished on a magneto-optical disk, whether the light modulation recording system or the magnetic-field modulation recording system is employed. In other words, a new magnetic signal can be recorded without erasing the magnetic signal previously recorded. The disk for use in the magnetic-field modulation recording system has a broader manufacture margin than the disk for use in the light modulation recording system, because its magnetic layer (i.e., recording surface) is relatively simple in structure. In view of this, the disk for use in the magnetic-field modulation recording system is advantageous over the disk for use in the light modulation recording system. Known as magneto-optical disks for use in the magnetic-field modulation recording system are MD (Mini Discs), HS disks and the like. (Both the MD disk and the HS disk are trademarks.)

It is demanded that the magneto-optical disk fulfill two requirements. First, it should record signals at high density. Secondly, it should excel in recording property. In the case of a magneto-optical disk whose magnetic layer consists of a single film, the composition of the magnetic layer must be changed by, for example, increasing the Co content to raise the Curie point of the magnetic layer. The Curie point needs to be raised in order to compensate for the quality-deterioration of signals that results from the fact that the signals are recorded on the disk at a high density. If the Co content of the magnetic layer is increased, however, the recording/reproducing property will differ from one oxidized region to another of the magnetic layer. Consequently, the recording property of the magnetic layer will deteriorate in low-intensity magnetic fields.

It is proposed that the magnetic layer be composed of two films and that the two films are independently controlled in terms of their compositions to prevent the recording property from deteriorating in low-intensity magnetic fields, as is disclosed in, for example, in Jpn. Pat. Appln. KOKAI Publication Nos. 4-281239 and 6-162583 and International Patent WO94/03892. More precisely, the magnetic layer should consist of a low-coercive force film and a high-coercive force film. The low-coercive force film has a high Curie point, while the high-coercive force film has a low Curie point. Both the low-coercive force film and the high-coercive force film can be vertically magnetized. The low-coercive force film and the high-coercive force film are exchange-coupled, thereby to prevent the magnetic layer from deteriorating in terms of the property of recording signals in a low-intensity magnetic field.

As regards the conventional magneto-optical disk whose magnetic layer consists of two films, it has not been fully understood how the recording property of each magnetic film changes with the composition and thickness of the film. Further, the exchange coupling of the two magnetic films cannot be sufficiently stable when the films undergo various changes. Consequently, the conventional magneto-optical disk of this type can hardly achieve sufficiently stable recording, such as overwriting of signals, in a low-intensity magnetic field.

### BRIEF SUMMARY OF THE INVENTION

Accordingly, the object of the present invention is to provide a magneto-optical disk whose magnetic layer consists of two film, each having such a specific composition that the magnetic signals may be reliably recorded in a low-intensity magnetic field.

The inventor of the present invention conducted researches and studies with diligence in order to achieve the above-mentioned object. The inventor has found that the intensity of the demagnetizing field generated by two magnetic films of different types depends upon the thickness of the oxidized layer formed between these magnetic films. The demagnetization field generated by the two magnetic films laid one on the other depends upon the sum of the product of the saturation magnetization Ms and thickness h of one magnetic film and the product of the saturation magnetization Ms and thickness h of the other magnetic film The inventor has found that signals can be reliably recorded in the magnetic layer even in a low-intensity magnetic field if an oxide film is provided in the magnetic layer. Thus, the inventor made the present invention.

The magneto-optical disk according to the present invention comprises: a first magnetic film having a predetermined Curie point, made of GdFeCo; and a second magnetic film laid on the first magnetic film, having a lower Curie point than the fast magnetic film and made of TbFeCo. The first magnetic film has an oxide film.

As mentioned above, the magneto-optical disk thus structured has an oxide film in the first magnetic film. The thickness of the first magnetic film and the thickness of the oxide film may be changed, rendering it possible to control the magnetic characteristic of the first magnetic film.

As has been described above, the first magnetic film of the magneto-optical disk according to this invention has an oxide film. The thickness of the first magnetic film and the thickness of the oxide film may be changed, thereby to control the magnetic characteristic of the first magnetic film. This makes it easy to control the magnetic characteristic of the magnetic layer composed of the first and second magnetic films. Hence, with the magneto-optical disk of the present invention it is possible to record data reliably at high density, without deteriorating the recording characteristic even in a low-intensity magnetic field.

### BRIEF DESCRIPTION OF THE SEVERAL VIEWS OF THE DRAWING

FIG. 1 is a magnified sectional view of a major part of a magneto-optical disk according to one embodiment of the present invention;
FIG. 2 is a graph illustrating the relation between the coercive force and spontaneous magnetization, which is observed in a magnetic layer composed of a GdFeCo film only;
FIG. 3 is a diagram depicting an abnormal loop observed in the magnetic layer composed of a GdFeCo film only;
FIG. 4 is a graph showing the results of the numerical-value simulation conducted on a magneto-optical disk whose magnetic layer is composed of a GdFeCo film and an oxidized GdFeCo film;
FIG. 5 is a contour plan representing the relation between the spontaneous magnetization of the first film and that of the second film, in terms of CNR characteristic, observed in the magneto-optical disk;
FIG. 6 is a graph illustrating the CNR characteristic that a sample disk of the magneto-optical disk exhibits when a 2T signal is reproduced from the sample disk;
FIG. 7 is a graph showing the CNR characteristic that the sample disk of the magneto-optical disk exhibits when an 8T signal is reproduced from the sample disk;
FIG. 8 is a diagram showing the results of the simulation conducted on the magneto-optical disk, in respect of the reflectance of the magneto-optical disk;
FIG. 9 is a diagram illustrating the results of the simulation conducted on the magneto-optical disk, in respect of the phase compensation of the magneto-optical disk; and
FIG. 10 is a diagram showing the results of the simulation conducted on the magneto-optical disk, in respect of the efficiency of the magneto-optical disk.

### DETAILED DESCRIPTION OF THE INVENTION

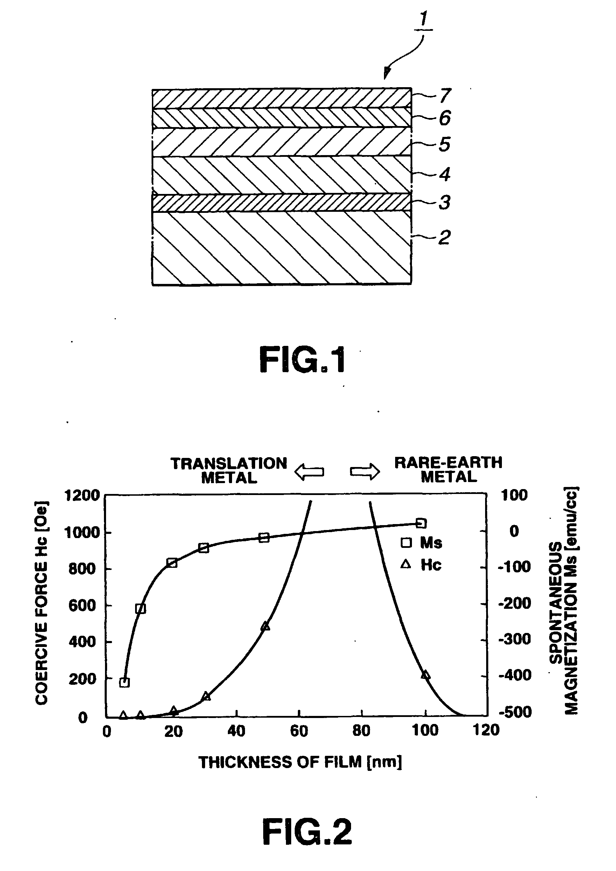

A magneto-optical disk according to the present invention will be described, with reference to the accompanying drawings. First, a magneto-optical disk 1 of the type shown in FIG. 1 will be described.

This magneto-optical disk 1 comprises a substrate 2, a first dielectric film 3, a first magnetic film 4, a second magnetic film 5, a second dielectric film 6, and a reflecting film 7. The substrate 2 is shaped like a disc. The first dielectric film 3 is provided on the substrate 2. The first magnetic film 4 is formed on the first dielectric film 3. The second magnetic film 5 is formed on the first magnetic film 4. The second dielectric film 6 is provided on the second magnetic film 5. The reflecting film 7 is provided on the second dielectric film 6.

The magneto-optical disk 1 is contained in, for example, a disk cartridge (not shown) and can be removed therefrom. To record and reproduce data on and from the magneto-optical disk 1, a recording/reproducing apparatus applies a laser beam through the substrate 2. The laser beam irradiates the first magnetic film 4 and the second magnetic film 5. It should be noted that the magneto-optical disk may be used, not contained in a disk cartridge, or may be incorporated in the recording/reproducing apparatus.

The magneto-optical disk 1 may further comprise two protective films formed on the respective major surfaces, i.e., the outer surface of the substrate 2 and the outer surface of the reflecting film 7. The protective films can be formed by curing ultraviolet-curable resin applied on outer surfaces of the substrate 2 and film 7 by, for example, a spin coating apparatus. The protective films, thus formed, protect the other films of the disk 1 from scratching and oxidation, thereby preventing these films from deteriorating.

The substrate 2 of the magneto-optical disk 1 is a disc made of hard material is transparent to the laser beam emitted from the recording/reproducing apparatus. The material is, for example, a resin such as polycarbonate resin, acrylic resin, polyolefin resin or epoxy resin. Alternatively, the material may be glass such as quartz glass. Grooves may be made in the substrate 2 so that recording tracks may extend along these grooves.

The first dielectric film 3 and the second dielectric film 6 have been formed thin, on the substrate 2, by thin-film forming technique such as sputtering. The films 3 and 6 are made of, for example, Si₃N₄, SiN, AlN, Al₂O₃, AlSiNO, HfO₂, ZnS, ZrO₂, Y₂O₃, M_{g}O, SiO₂, MaF₂ or LiF, or the like. In the present embodiment, the dielectric films 3 and 6 are made of Si₃N₄.

The reflecting film 7 is thin, formed on the second dielectric film 6. The reflecting film 7 reflects the laser beam which has been applied to the substrate 2 and which has passed through the first magnetic film 4 and the second magnetic film 5. The film 7 therefore helps to enhance the Kerr effect in the process of reproducing data, and to control the recording sensitivity. It is desired that the reflecting film 7 be made of non-ferrous metal such as Al, Au, Ti, Cr, Ag or Cu, a compound of any of these non-ferrous metals, or a composite material of these non-ferrous metals.

The first magnetic film 4 has a prescribed Curie point, is made of GdFeCo and is provided in the form of a thin film on the first dielectric film 3. The first magnetic film 4 serves as a low-coercive force film in the magneto-optical disk 1. In the present embodiment, the first magnetic film 4 is one made of GdₓFe₈₇₋ₓCo₁₃. The spontaneous magnetization of the first magnetic film 4 can be controlled by changing the value of x. The Curie point of the first magnetic film 4 is, more specifically, 300°C or more.

The first magnetic film 4 has an oxide film. In the magneto-optical disk, the thickness of the oxide film included in the first magnetic film 4 may be controller as will be described later, so that an exchange interaction may well take place between the first magnetic film 4 and the second magnetic film 5.

The second magnetic film 5 has a Curie point lower than that of the first magnetic film 4, is made of TbFeCo and is provided in the form of a thin film on the first magnetic film 4. The second magnetic film 5 functions as a high-coercive force film in the magneto-optical disk 1. The second magnetic film 5 is made of Tb_{y}Fe_{87-y}Co₁₃. The spontaneous magnetization of the second magnetic film 5 can be controlled by changing the value of y. The Curie point of the second magnetic film 5 actually is equal to or more than 200°C, but less than 300°C. Thus, in the magneto-optical disk 1, a magnetic signal can be rewritten when a laser beam is applied to the first magnetic film 4 and second magnetic film 5, thereby heating both magnetic films to, for example, 250°C.

It will now be described how the inventor has come to find desirable to provide an oxide film in the first magnetic film as in the magneto-optical disk 1 describe above.

First, to determine the relation between the thickness of the magnetic layer of a magneto-optical disk and the magnetic characteristic of the magnetic layer, the inventor formed thin magnetic layers made of GdFeCo and having different thickness on substrates,. Then, the inventor measured the coercive force Hc and spontaneous magnetization Ms of each magnetic layer, at room temperature. The results were as is shown in FIG. 2.

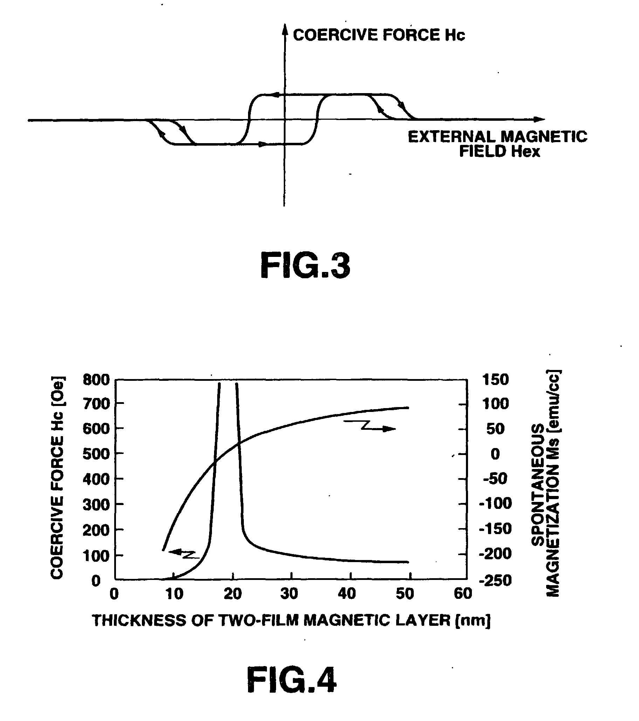

It was observed that, as seen from FIG. 2, the thinner the magnetic layer, the more dominant the influence the transition metal imposes on the magnetic characteristic. The inventor studied to the results to find why so. Then, a GdFeCo film, which had a compensation point at room temperature or a higher temperature and in which the rare-earth metal was dominant, was found to exhibit such an abnormal loop as is illustrated in FIG. 3. The abnormal loop shown in FIG. 3 is the one that a magnetic layer having a thickness of 100 nm exhibited.

Such an abnormal loop as shown in FIG. 3 develops in two cases. In the first case, the magnetic layer consists of a magnetic film in a compensative composition region and a magnetic film in a transition-metal dominant region or a rare-earth metal dominant region, and these magnetic films undergo exchange-coupled to each other to switched connection. In the second case, the magnetic layer does not consists of two distinct magnetic films but exhibits such a composition gradient that it appears to consist of two magnetic films, and such films undergo exchange-coupled to each other. In the high-intensity magnetic field, each magnetic film is magnetized in the direction of the external magnetic field. A magnetic wall is therefore formed between the two magnetic films.

Generally, a magnetic layer exhibits such an abnormal loop as shown in FIG. 3 if it is a ferrimagnetic layer in which a rare-earth metal is dominant and in which the compensation point exists between room temperature and the Curie point. Even if the magnetic layer consists of two films, it has no magnetic wall and exhibits no abnormal loop, provided that a transition metal or a rare-earth metal is dominant in each film. Hence, a magnetic layer may be said, in some cases, to consist of two films even if the layer does not exhibit an abnormal loop at all.

In the above-mentioned magnetic layer having two films, the rare-earth metal in one magnetic film seems to have been selectively oxidized at the start or end of the film formation. The characteristic of the magnetic film, thus oxidized, shift to the side which the transition metal increases. Thus, an oxide film, if provided on one of the magnetic films forming the magnetic layer, can control the magnetic characteristic of this magnetic film. This makes it possible to control the total magnetization of the two magnetic films. It is therefore easy to control the magnetic characteristic of the entire magnetic layer consisting of two magnetic films.

To be more specific, the first and second magnetic films of the magneto-optical disk is made of GdFeCo and TbFeCo, respectively, and the second film is fixed at a particular magnetic characteristic. In this case, the characteristic of the first magnetic film must be adjusted to be a desired one. To this end, an oxide film is provided on the first magnetic film, thereby controlling the magnetic characteristic of the first magnetic film. This makes it easy to control the magnetic characteristic of the magneto-optical disk as a whole.

What kind of magnetic characteristic may achieved if an oxide film is formed on one magnetic film as described above was studied by simulation using a simultaneously rotating model of a ferrimagnetic layer that has an oxide film on it. The simulation was based on the assumption that a GdFeCo film and an oxidized GdFeCo film undergo exchange coupling. In the simulation, the coercive force Hc and spontaneous magnetization Ms of the combination of these two films were calculated.

To calculate these numerical values, the thickness, coercive force and spontaneous magnetization of the oxidized GdFeCo film must be known. In practice, however, it is difficult to measure these values of the oxidized GdFeCo film alone. Therefore, samples of the two-film magnetic layers, each including an oxidized GdFeCo film, which differed in thickness, were prepared to serve the simulation. Then, the coercive force and spontaneous magnetization were measured of each of the samples. The coercive force and spontaneous magnetization of the oxidized GdFeCo film were determined from the values measured of these samples. It should be noted that the oxidized GdFeCo films in the samples had the same thickness of 7 nm. The results of the simulation were as is shown in the following Table 1.

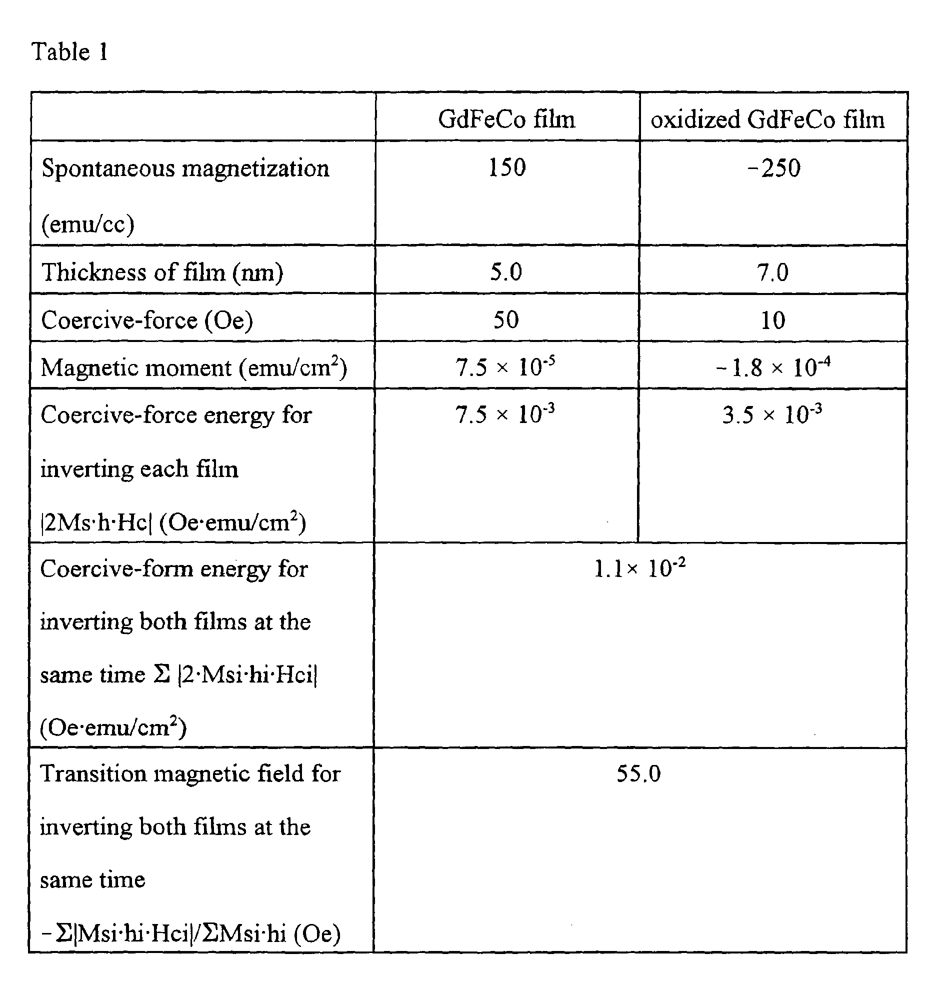

Using the values shown in Table 1, the coercive force Hc and spontaneous magnetization Ms were calculated, which the two-film magnetic layer would have if the thickness of the GdFeCo film were changed from 0 nm to 50 nm. The results of the calculation were as is shown in FIG. 4. In FIG. 4, spontaneous magnetization Ms of a negative value indicates that the rare-earth metal is dominant in the two-film magnetic layer, whereas spontaneous magnetization Ms of a positive value indicates that the transition metal is dominant in the two-film magnetic layer. FIG. 4 also shows the values of a magnetic layer having a thickness of 7 nm, which means that the GdFeCo film has a thickness of 0 nm or that the magnetic layer consists of only an oxidized GdFeCo film.

As seen from the results shown in FIG. 4, the spontaneous magnetization Ms changes from -200 emu/cc at which the transition metal is dominant in the layer to 50 emu/cc at which the rare-earth metal is dominant in the layer when the thickness of the two-film magnetic layer is changed from 7 nm to 30 nm. This demonstrates that the magnetic characteristic of the two-film magnetic layer greatly depends on its thickness even if the magnetic films have the same composition, provided that the magnetic layer includes an oxide film. The results of the simulation, which are shown in FIG. 4, can be said to qualitatively resemble the measured values shown in FIG. 2.

Thus, the inventor has come to know that, in the case of a magneto-optical disk having a thin magnetic layer, the magnetic characteristic of the magnetic layer largely depends upon its thickness. That is, in the magneto-optical disk 1 of this invention, the two-film magnetic layer can have desirable magnetic characteristic by controlling its thickness, because the first magnetic film 4 has an oxide film. With the magneto-optical disk 1, stable recording, such as overwriting of signals, can be efficiently achieved in a low-intensity magnetic field.

A method of manufacturing the magneto-optical disk 1 described above will be explained below.

First, the first dielectric film 3 made of, for example, SiN or the like is formed on the disc-shaped substrate 2. The first magnetic film 4 is formed on the first dielectric film 3. The unfinished structure is left to stand for some time. Then, the second magnetic film 5 is formed on the first magnetic film 4. The period for which the structure is left to stand until the start of forming the second magnetic film is adjusted, thereby controlling the thickness of the oxide film formed on the first magnetic layer 4. Further, the second dielectric film 6 is formed on the second magnetic film 5, and the reflecting film 7 is formed on the second dielectric film 6. The magneto-optical disk 1 is thereby manufactured. In this method of manufacturing the disk 1, each film can be formed by various processes, such as sputtering, vacuum vapor deposition and the like.

The oxide film formed on the first magnetic film 4 has been formed as the surface region of the first magnetic film 4 is oxidized due to the oxygen and moisture existing at the first magnetic film 4, during the period until the second magnetic film 5 is formed. More precisely, the rare-earth metal (Gd) present near the surface of the first magnetic film 4 is selectively oxidized, forming an oxide film.

The thickness of the oxide film may be controlled by changing the pressure in the chamber of the sputtering apparatus used or the kind of the sputter gas used, not by controlling, as described above, the time for leaving the unfinished structure is left to stand.

The inventor conducted various experiments, in which a magnetic signal was recorded and reproduced on and from the magneto-optical disks made in the same way as the magneto-optical disk 1 described above. The recording/ reproducing apparatus used in the experiment has an optical system which emits a laser beam having a wavelength of 650 nm and which has a numerical aperture NA of 0.52. The recording/reproducing apparatus is one designed to record and reproduce a magnetic signal at a linear speed of 2 m/sec. In the apparatus, a pulse signal of a channel-clock frequency of 8.8 MHz and an emission-duty ratio of 50% was used to emit the laser beam to the magneto-optical disk 1. A magnetic signal was thereby recorded and reproduced on the disk 1 by magnetic-field modulation. In the experiment, two types of record marks were used. The first type was 0.45 µm long, corresponding to the shortest mark (2T signal) of (1,7) modulation. The second type was 1.8 µm long, corresponding to the longest mark (8T signal).

### Experiment 1

First, a plurality of sample magneto-optical disks were made, which were based on the magneto-optical disk 1 and which differed in the spontaneous magnetization Ms of the first and second magnetic films 4 and 5. The first magnetic film 4 was one made of GdₓFe₈₇₋ₓCo₁₃, having a thickness of 10 nm and a Curie point of 300°C or more to function as a low-coercive force film. On the other hand, the second magnetic film 5 was one made of Tb_{y}Fe_{87-y}Co₁₃, having a thickness of 20 nm and a Curie point of 250°C or more to serve as a high-coercive force film. The spontaneous magnetization Ms of each magnetic film was controlled by changing the values of x and y. Each magneto-optical disk comprised a grooved substrate 2 and two protective films made of ultraviolet-curable resin and provided respectively on the major surfaces of the substrate 2.

Next, the recording/reproducing apparatus recorded a magnetic signal on the magneto-optical disks thus manufactured. The record mark used was 0.45 µm long, corresponding to a 2T signal. The magnetic field applied had an intensity of ±100 [Oe].

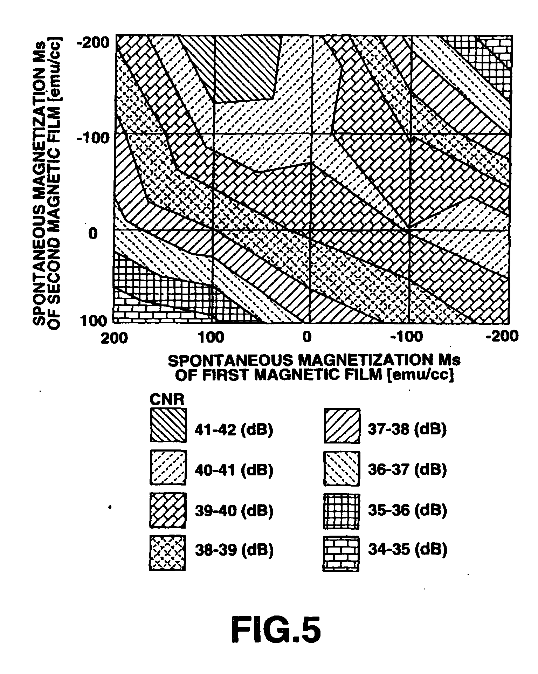

Then, the magnetic signal was reproduced from the magneto-optical disks. CNR (Carrier-to-Noise Ratio) was measured of the magnetic signal reproduced from each magneto-optical disk. The results of CNR measuring were as is shown in the contour plan of FIG. 5. In FIG. 5, the spontaneous magnetization Ms of the first magnetic film 4 is plotted on the abscissa, and the spontaneous magnetization Ms of the first magnetic film 4 is plotted on the ordinate. As seen from FIG. 5, as the spontaneous magnetization Ms changes from a positive value to a negative value, the contents of the rare-earth element (Gd, Tb) in each magnetic film. FIG. 5 also reveals that the transition metal is dominant in a region where oxygen compensates for composition and the spontaneous magnetization Ms has a negative value.

As can be understood from the results shown in FIG. 5, the magneto-optical disk 1 exhibits good magnetic characteristic in the region where the transition metal is dominant in the first magnetic film 4 if the spontaneous magnetization Ms of the second magnetic film 5 is fixed at zero (0). That is, the disk 1 exhibits good magnetic characteristic in the region where the spontaneous magnetization Ms of the first magnetic film 4 ranges from -100 emu/cc to -200 emu/cc. In other words, the disk 1 can acquire good magnetic characteristic by controlling the thickness of the first magnetic film 4, if the first and second magnetic films 4 and 5 have fixed compositions and the second magnetic film 5 has a fixed thickness. The magneto-optical disk 1 can, therefore, record a magnetic signal as is desired, even in a magnetic field of low intensity.

To impart good recording characteristic to the magneto-optical disk 1, it is desired that the second magnetic film 5 should have spontaneous magnetization Ms of almost zero (0). If the spontaneous magnetization Ms of the first magnetic film 5 much deviates from zero (0), a stray magnetic field will be generated in a region having a Curie point equal to or higher than tat of the second magnetic film 5. In this case, the first magnetic film 4 can hardly be a film that can performs stable vertical magnetization. This renders it difficult for the disk 1 to record signals in a low-intensity magnetic field. It is therefore desired that the spontaneous magnetization Ms of the first magnetic film 4 be set near zero (0).

### Experiment 2

In this experiment, the thickness of the first magnetic film 4 was adjusted to control the magnetic characteristic of the magneto-optical disk 1, in the process of manufacturing the disk 1.

First, a plurality of sample magneto-optical disks were made, which were based on the magneto-optical disk 1 as in Experiment 1. These sample disks were identical in the compositions of the first and second magnetic films 4 and 5 and the thickness of the second magnetic film 5. However, they differed in the thickness of the first magnetic film 4 as is shown in the following Table 2. The first dielectric film 3, oxide film on the first magnetic film 4, second magnetic film 5, second dielectric film 6 and reflecting film 7 of each sample disk were 80 nm, 7 nm, 20 nm, 20 nm and 35 nm thick, respectively.

**Table 2**

| | Thickness of first magnetic film (nm) |
|---|---|
| Sample disk 1 | 8 |
| Sample disk 2 | 10 |
| Sample disk 3 | 12 |
| Sample disk 4 | 14 |

Next, the recording/reproducing apparatus recorded a magnetic signal on the sample disks thus manufactured. The record mark used was 0.45 µm long, corresponding to a 2T signal. The magnetic field applied had an intensity ranging from 50 [Oe] to 250 [Oe].

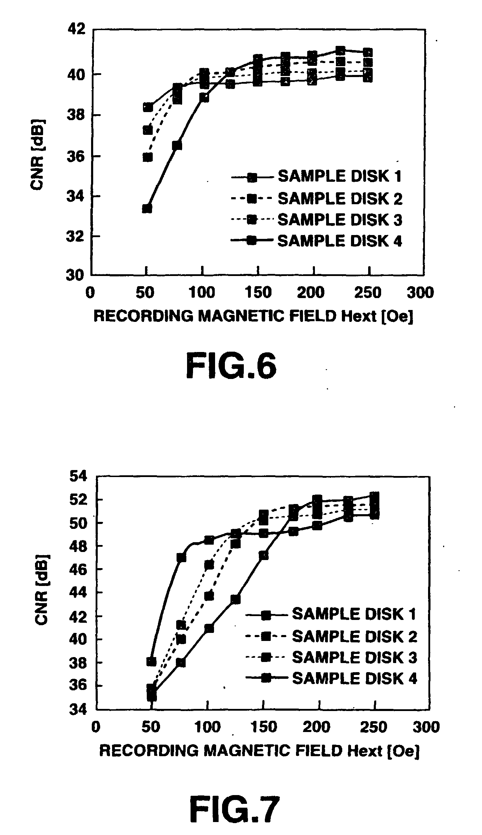

Then, the magnetic signal was reproduced from the sample disks, and the CNR was measured of the magnetic signal reproduced from each sample disk in the same way as in Experiment 1. FIG. 6 shows the CNR characteristics of the sample disks, which were determined from the 2T signals reproduced from the respective disks. FIG. 7 shows the CNR characteristics of the sample disks, which were determined from 8T signals reproduced from the respective disks. In FIGS. 6 and 7, the external magnetic field Hext applied to record the magnetic signal in each sample disk is plotted on the abscissa.

As seen from the results shown in FIG. 6, the CNR of the 2T signal reproduced from the sample disk 1 whose first magnetic film is 8 nm thick reached an equilibrium value at a magnetic field of 150 [Oe], while the CNR of the 2T signal reproduced from the sample disk 4 whose first magnetic film is 14 nm thick reached an equilibrium value at a magnetic field of 70 [Oe]. From FIG. 7 it is seen that the CNR of the 8T signal reproduced from the sample disk 1 whose first magnetic film is 8 nm thick reached 45 dB at a magnetic field of 140 [Oe], but the CNR of the 8T signal reproduced from the sample disk 4 whose first magnetic film is 14 nm thick exceeded 45 dB at a magnetic field of 170 [Oe].

Hence, the CNR characteristic of the magneto-optical disk 1 increases if the first magnetic film 4 is made thicker. Data can therefore be reliably recorded on the disk 1 even at a low-intensity magnetic field. The magnetic characteristic of the first magnetic film 4 can be controlled by adjusting the thickness of the first magnetic film 4.

### Experiment 3

In Experiment 3, a numerical-value simulation was performed for the magneto-optical disk 1. More specifically, the reflectance, phase compensation, performance index and the like of the magneto-optical disk 1 were studied. The first and second magnetic films 4 and 5 have almost the same reflectance and Vogt's parameter, as is proved by optical numerical-value simulation. Thus, the following calculation was effected on the assumption that both magnetic films are formed integral, providing a single magnetic film.

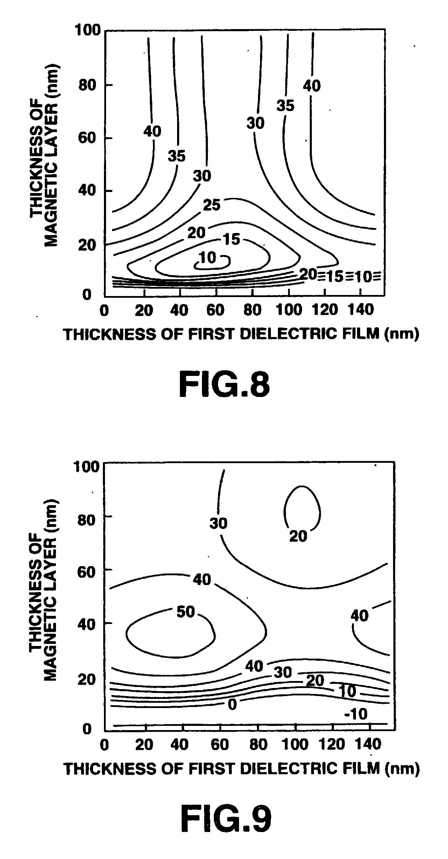

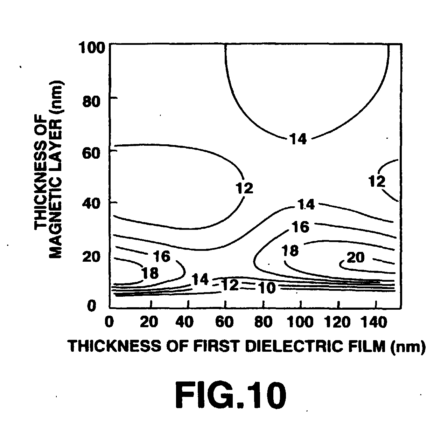

The following calculation was made on the assumption that the first and second dielectric films 3 and 6 are made of SiN and that the second dielectric film 6 and the reflecting film 7 were 20 nm thick and 20 nm thick, respectively. The results of the calculation were as shown in FIGS. 8, 9 and 10. More correctly, FIG. 8 shows how the reflectance of the magneto-optical disk 1 changes with the thickness of the first dielectric film 3 and that of the magnetic layer. FIG. 9 shows how the phase compensation of the disk 1 changes with the thickness of the first dielectric film 3 and that of the magnetic layer. FIG. 10 shows how the performance index of the disk 1 changes with the thickness of the first dielectric film 3 and that of the magnetic layer. Each of the numerals in FIG. 8 indicates reflectance (%), each numeral in FIG. 9 shows phase compensation (degree), and each numeral in FIG. 10 represents performance index (R · Θk).

As seen from the results shown in FIGS. 8 and 9, the reflectance and phase compensation of the magneto-optical disk 1 are determined by the thickness of the first dielectric film 3 and the thickness of the magnetic layer, provided that the thickness of the second dielectric film 6 and the reflecting film 7 are fixed.

The results shown in FIG. 10 reveal that the magneto-optical disk 1 has the maximum performance index when the total thickness of the first and second magnetic films 4 and 5 is about 12 nm to 16 nm Hence, the disk 1 can have its magnetic characteristic enhanced if the total thickness of the magnetic films 4 and 5 is 12 nm or more. If the total thickness of the magnetic films 4 and 5 is too large, it will be difficult to distribute temperature uniformly in the disk 1 when a laser beam is applied to the disk 1 to record data thereon. Ultimately, it will be difficult to accomplish good data-recording. In view of this, it is desired that the total thickness of the first and second magnetic films 4 and 5 be 100 nm or less.

The results shown in FIG. 10 will be compared with the results obtained in Experiment 2. Assume that the first dielectric film 3 is 80 nm thick as in the sample disks used in Experiment 2. Then, the performance index is 16 if the total thickness of the first and second magnetic films 4 and 5 is 28 nm, and is 14 if the total thickness of the magnetic films 4 and 5 is 34 nm. As seen from the results shown in FIGS. 6 and 7, the sample disk exhibiting a high CNR in a low-intensity magnetic field comes to exhibit a low CNR in a high-intensity magnetic field, or vice versa. This is because the sample disks differ in performance index as can be understood from the results shown in FIG. 10.

## Claims

1. A magneto-optical disk (1) comprising:
a first magnetic film (4) having a predetermined Curie point, made of GdFeCo and having an oxide film;
a second magnetic film (5) laid on the first magnetic film (4), having a lower Curie point than the first magnetic film and made of TbFeCo.

2. The magneto-optical disk according to claim 1, wherein the Curie point of the first magnetic film (4) is at least 300°C, and the Curie point of the second magnetic film (5) is at least 200°C and less than 300°C.

3. The magneto-optical disk according to claim 1 or 2, wherein a total thickness of the first and second magnetic films (4, 5) is at least 12 nm.

4. The magneto-optical disk according to anyone of claims 1 to 3, wherein the oxide film has a thickness of 7 nm at most.

5. The magneto-optical disk according to anyone of claims 1 to 4, wherein a transition metal is dominant in the first and second magnetic films (4, 5) at room temperature.

6. The magneto-optical disk according to anyone of claims 1 to 5, wherein a first dielectric film, the first magnetic film (3), the second magnetic film (4), a second dielectric film (6), and a reflecting film (7) are laid one upon another, in the order mentioned.
